# EUROPÄISCHE PATENTANMELDUNG

(11) **EP 1 495 660 A1**
(43) Veröffentlichungstag der Anmeldung: **12.01.2005**
(21) Anmeldenummer: 04016051.7
(22) Anmeldetag: 08.07.2004
(51) Int. Cl.: A01B 29/04, A01B 29/06

(54) **Bodenwalze**

(30) Priorität: 10.07.2003 DE 10331233
(71) Anmelder: Rabe Agrarsysteme GmbH & Co. KG, 49152 Bad Essen (DE)
(72) Erfinder: von Allwörden, Wilhelm, Dipl.-Ing., 49152 Bad Essen (DE)

(57) **Zusammenfassung**

Bodenwalze (1) mit umlaufenden ringförmigen Erhebungen, die nach außen vorstehend in den Walzenkörper (2) eingeformt sind, wobei der Walzenkörper (2) aus nebeneinander angeordneten hohlen Walzenringen (3,3',9) zusammengeschweißt ist und zur Stabilisierung vor dem Verschweißen der Walzenringe (3,3',9) im Inneren des Walzenkörpers (2) ein längsseitig offenes Innenrohr (5) angeordnet ist, welches zur Zentrierung der Walzenringe (3,3',9) mit Vorspannung am Innendurchmesser (I) der Walzenringe (3,3',9) anliegt und das Innenrohr (5) aus einer rechteckigen Blechtafel gerollt ist, wobei die Wandstärke (W') des Innenrohres (5) dünner ist als die Wandstärke (W) der Walzenringe (3,3',9).

## Beschreibung

Die Erfindung betrifft eine Bodenwalze mit den Merkmalen nach dem Oberbegriff des Patentanspruches 1.

In der deutschen Patentanmeldung DE 195 38 584 A1 ist eine derartige Bodenwalze beschrieben. Die beschriebene Bodenwalze besteht aus einzelnen nebeneinander angeordneten aus Blech geformten Walzenringen, die stirnseitig miteinander verschweißt sind. Zur Stabilisierung des Walzenkörpers sind im Inneren des Walzenkörpers drei oder mehr Stabilisierungsstreben angeordnet, die im Bereich der stirnseitig verschweißten Walzenringe mit den Walzenringen verschweißt sind. Zur Vermeidung eines Höhenschlages in der Bodenwalze ist zur Herstellung einer solchen Walze ein erheblicher Vorrichtungsaufwand erforderlich.

Der Erfindung liegt die Aufgabe zugrunde, eine in einfacher Weise herzustellende Bodenwalze zu schaffen, die leicht ist und einen geringen Höhenschlag aufweist.

Erfindungsgemäß wird diese Aufgabe durch ein längsseitig offenes Innenrohr innerhalb des Walzenkörpers gelöst. Dieses Innenrohr wird vor dem Aufschieben der Walzenringe durch Verspannen im Durchmesser verkleinert. Nach dem Aufschieben der Walzenringe wird das Rohr entspannt, so daß sich der Außendurchmesser des Innenrohres durch die innere Vorspannung an den Innendurchmesser der Walzenringe anlegt. Durch den Spalt zwischen den Stirnseiten der Walzenringe ist ein Toleranzausgleich zwischen den einzelnen Walzenringen möglich. Nach der Fixierung der Walzenringe auf Abstand werden die Walzenringe stirnseitig und das Innenrohr miteinander verschweißt. Die Schweißnaht füllt dabei den Spalt zwischen den Walzenringen aus.

Die Endplatten verschließen den Walzenkörper und das Innenrohr stimseitig. Der Außendurchmesser der Endplatten entspricht im wesentlichen dem Außendurchmesser der Walzenringe. Zur Aufnahme der Walzenlagerung ist an der Endplatte zentrisch ein Lagerzapfen angeordnet.

Weitere Vorteile und Merkmale der Erfindung gehen aus den Unteransprüchen sowie den Beispielbeschreibungen und den Zeichnungen hervor. Dabei zeigen die folgenden Zeichnungen:

**Fig. 1** den Walzenkörper einer Bodenwalze in Teilansicht und im Schnitt

**Fig. 2** den Walzenkörper einer Bodenwalze in Seitenansicht und im Schnitt

**Fig. 3** den Walzenkörper einer Bodenwalze mit Nockensegmenten in Teilansicht und im Teilschnitt

**Fig. 4** ein Nockensegment mit Lochschweißung in Seitenansicht

**Fig. 5** den Walzenkörper einer Bodenwalze mit einstückigen Walzenringen in Teilansicht und im Teilschnitt

**Fig. 6** einen Walzenring mit Nockenringsegment und Verzahnung im Schnitt

Die Bodenwalze **1** in **Fig**. **1** besteht aus dem Walzenkörper **2** mit angeschweißten Endplatten **10** und zentrisch angeordneten Lagerzapfen **13** sowie einem nicht dargestellten Rahmen mit Lagerungen. Der Walzenkörper 2 weist auf dem Innenrohr **5** nebeneinander angeordnete Walzenringe **3** auf, die stirnseitig im Abstand **A** mit dem Innenrohr **5** verschweißt sind, wobei die Schweißnaht **12** den Abstand **A** und die Wandstärke **W** der Walzenringe **3** ausfüllt.

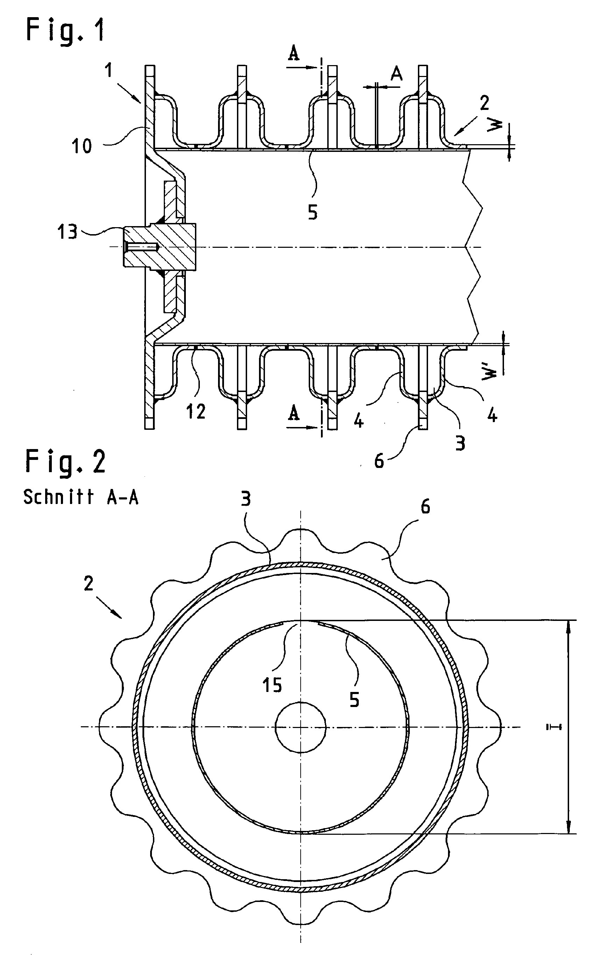

Der Walzenring **3** weist zwei gleiche Walzenringhälften **4** auf sowie ein oder mehrere Nockenringsegmente **6**. Wie in Fig. **2** vorgeschlagen, ist das Innenrohr **5** längsseitig offen und liegt am Innendurchmesser **I** der Walzenringe **3** an. Das Innenrohr **5** kann so gerollt sein, daß das Innenrohr **5** nach dem Entspannen einen Spalt **15** aufweist. Es ist aber auch möglich, daß nach dem Entspannen des Innenrohres **5** kein Spalt **15** vorhanden ist.

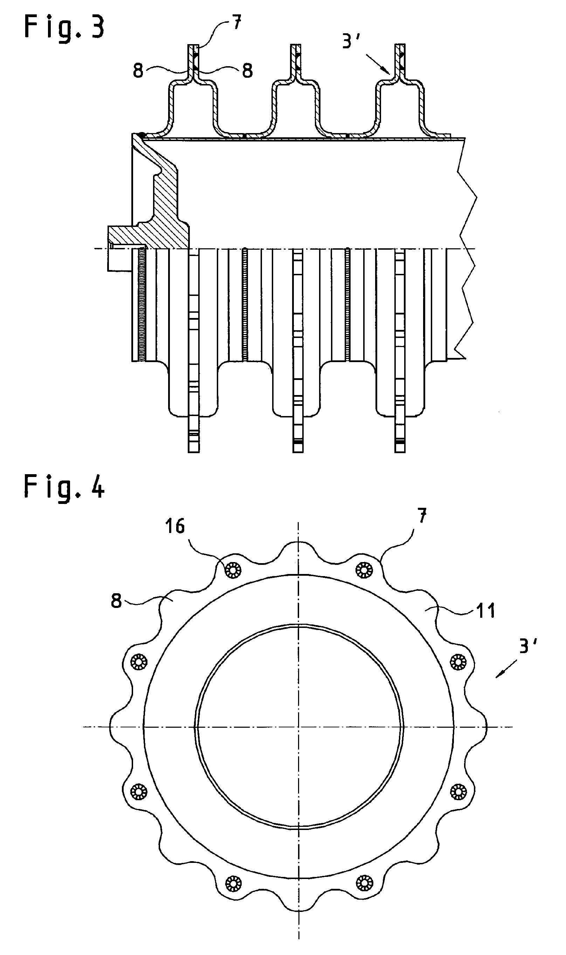

Um den Walzenkörper **2** aus zweiteiligen Walzenringen **3**' herzustellen, werden die Walzenringe **3**' gemäß Fig. **3** aus je zwei gepreßten Nockensegmenten **8** zusammengeschweißt. Die einzelnen Nockensegmente **8** sind dabei im Abstand **A** mit dem Innenrohr 5 verschweißt.

Die Nockensegmente **8** sind am äußeren Rand **7** vorzugsweise in den Nocken **11** wechselweise durch eine Lochschweißung **16** miteinander verschweißt, wie in Fig. **4** dargestellt. Es ist auch möglich, die Nockensegmente **8** nach anderen Herstellverfahren zu verbinden.

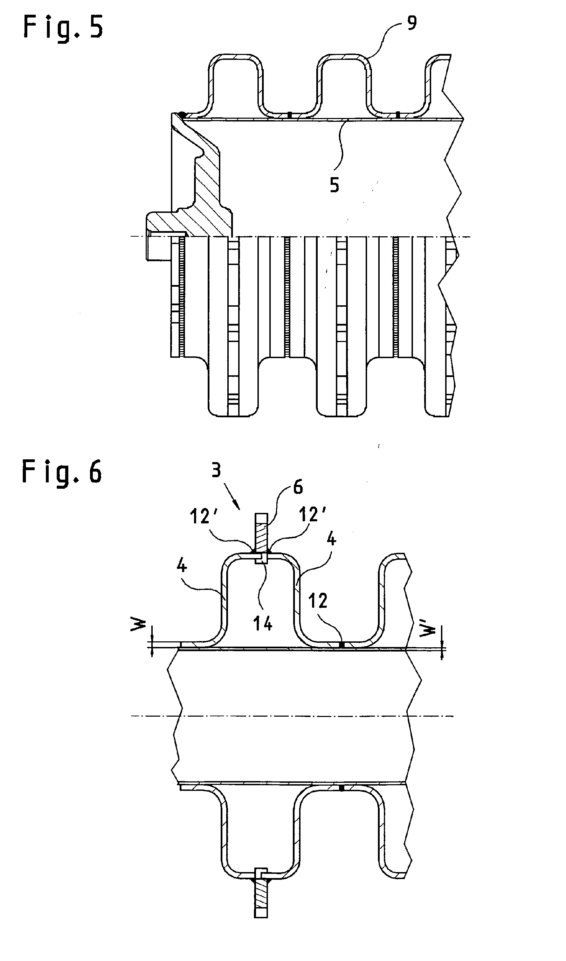

In Fig. **5** wird ein weiteres Beispiel einer Bodenwalze **1** gezeigt. Der Walzenkörper **2** weist auf dem Innenrohr **5** nebeneinander angeordnete einstückige Walzenringe **9** auf, die im Abstand **A** mit dem Innenrohr **5** verschweißt sind.

Der Walzenring **3** in Fig. **6** weist zwischen den Walzenringhälften **4** und dem Nockenringsegment **6** eine Verzahnung **14** auf, welche die Bauteile zueinander fixiert. Das Nockenringsegment **6** und die beiden baugleichen Walzenringhälften **4** bilden einen Walzenring **3**, der durch die Schweißnähte **12**' zusammengehalten wird.

### Bezugszeichenliste

- 1: Bodenwalze
- 2: Walzenkörper
- 3: Walzenring
- 3': Walzenring
- 4: Walzenringhälfte
- 5: Innenrohr
- 6: Nockenringsegment
- 7: äußerer Rand
- 8: Nockensegment
- 9: einstückiger Walzenring
- 10: Endplatte
- 11: Nocken
- 12: Schweißnaht (stimseitig)
- 12': Schweißnaht (Nockenringsegment)
- 13: Lagerzapfen
- 14: Verzahnung
- 15: Spalt
- 16: Lochschweißung

- A: Abstand
- D: Durchmesser
- I: Innendurchmesser
- W: Wandstärke (Walzenkörper)
- W': Wandstärke (Innenrohr)

## Patentansprüche

1. Bodenwalze **(1)** mit umlaufenden ringförmigen Erhebungen, die nach außen vorstehend in den Walzenkörper **(2)** eingeformt sind, **dadurch gekennzeichnet, daß** der Walzenkörper **(2)** aus nebeneinander angeordneten hohlen Walzenringen **(3,3',9)** zusammengeschweißt ist und im Inneren des Walzenkörpers **(2)** einen im Verhältnis zur Wandstärke des Walzenkörpers **(2)** ein längsseitig offenes Innenrohr **(5)** angeordnet ist, welches zur Zentrierung der Walzenringe **(3,3',9)** mit Vorspannung am Innendurchmesser **(I)** der Walzenringe **(3,3',9)** anliegt und daß das Innenrohr **(5)** aus einer rechteckigen Blechtafel gerollt ist, wobei die Wandstärke **(W')** des Innenrohres **(5)** dünner ist als die Wandstärke **(W)** der Walzenringe **(3,3',9).**

2. Bodenwalze **(1)** nach Anspruch 1, **dadurch gekennzeichnet, daß** der Walzenring **(3)** zwei gleiche Walzenringhälften **(4)** aufweist und am äußeren Rand **(7)** der einen hohlringbildenden Walzenringhälften **(4)** ein- oder mehrteilige Nockenringsegmente **(6)** angeordnet sind, die mit den Walzenringhälften **(4)** vorzugsweise eine Verzahnung **(14)** bilden.

3. Bodenwalze **(1)** nach Anspruch 1 und 2, **dadurch gekennzeichnet, daß** der äußere Rand **(7)** der Walzenringhälfte **(4)** als Nockensegment **(8)** ausgebildet ist.

4. Bodenwalze **(1)** nach Anspruch 1, **dadurch gekennzeichnet, daß** der Walzenkörper **(2)** mehrere nebeneinander angeordnete und verschweißte einstückige Walzenringe **(9)** aufweist.

5. Bodenwalze (1) nach einem oder mehreren der vorgenannten Ansprüche, **dadurch gekennzeichnet, daß** die Nockenringsegmente **(6)** vorzugsweise härter sind als die Walzenringhälften **(4).**

6. Bodenwalze **(1)** nach einem oder mehreren der vorgenannten Ansprüche, **dadurch gekennzeichnet, daß** die Durchmesser **(D)** der Endplatten **(10)** und der Nockenringsegmente **(6)** im wesentlichen gleich sind.

7. Bodenwalze **(1)** nach einem oder mehreren der vorgenannten Ansprüche, **dadurch gekennzeichnet, daß** die Walzenringe **(3,3',9)** vor dem Schweißen mit dem Abstand **(A)** vorzugsweise 3-5 mm auf dem Innenrohr **(5)** fixiert sind und die Schweißnaht **(12)** das Innenrohr **(5)** mit den Walzenringen **(3,3',9)** verbindet.
